# EUROPEAN PATENT SPECIFICATION

(11) **EP 0 306 204 B1**
(45) Date of publication and mention of the grant of the patent: **03.03.1993**
(21) Application number: 88307810.7
(22) Date of filing: 24.08.1988
(51) Int. Cl.: G02B 6/44

(54) **Optical fiber cable for use in high temperature contaminating environment**
Faseroptisches Kabel für Anwendung in Hochtemperaturumgebung
Câble à fibre optique pour application dans un environnement à haute température

(30) Priority: 27.08.1987 US 90075
(43) Date of publication of application: 08.03.1989
(73) Proprietor: AT&T Corp., New York, NY 10013-2412 (US)
(72) Inventor: Krishnaswamy, Kathiresan, Marietta Georgia 30066 (US); Parbhubhai, D. Patel, Dunwoody Georgia 30338 (US); Santana, Manuel R., Doraville Georgia 30360 (US)
(74) Representative: Watts, Christopher Malcolm Kelway, Dr.

(56) References cited:
- EP-A- 0 158 433
- EP-A- 0 255 848
- WO-A-85/00689
- GB-A- 2 138 168
- GB-A- 2 145 556
- US-A- 4 284 842

## Description

### Technical Field

As the use of optical fiber has grown, so too have the requirements which must be met for its use in special situations. In those special situations, tensile strength may or may not be a requirement, but other properties must be achieved.

For example, in the construction of many buildings, a finished ceiling, which is referred to as a drop ceiling, is spaced below a structural floor panel that is constructed of concrete. The space between the ceiling and the structural floor from which it is suspended serves as a return-air plenum for elements of heating and cooling systems as well as a convenient location for the installation of communications cables including those for computers and alarm systems.

If and when the fire reaches the plenum, and if flammable material occupies the plenum, the fire can spread quickly throughout an entire story of the building. The fire could travel along the length of cables which are installed in the plenum. Also, smoke can be conveyed through the plenum to adjacent areas and to other stories.

Generally, a non-plenum cable sheath system which encloses a core of insulated copper conductors and which comprises only a conventional plastic jacket does not possess acceptable flame spread and smoke evolution properties. As the temperature in such a cable rises, charring of the jacket material begins. Afterwards, conductor insulation inside the jacket begins to decompose and char. If the jacket char retains its integrity, it functions to insulate the core; if not, it is ruptured by the expanding insulation char, exposing the virgin interior of the jacket and insulation to elevated temperatures. The jacket and the insulation begin to pyrolize and emit flammable gases. These gases ignite and, because of air drafts within the plenum, burn beyond the area of flame impingement, propagating flame and evolving smoke.

The prior art has addressed the problem of cable jackets that contribute to flame spread and smoke evolution through the use of special materials, such as fluoropolymers, for example. These, together with enclosing layers of other materials, have been used to control char development, jacket integrity and air permeability to minimize restrictions on choices of materials for insulation within the core. One prior art small size plenum cable is disclosed in U.S. Patent 4,284,842.

The problem of acceptable plenum cable design is complicated somewhat by the trend to the extension of the use of optical fiber transmission media from a loop to building distribution systems. Not only must the optical fibers be protected from transmission degradation, but also they have properties which differ significantly from those of copper conductors and hence require special treatment. As mentioned earlier, transmitting optical fibers are mechanically fragile, exhibiting low strain fracture under tensile loading and degraded light transmission when bent. One mechanism which causes degradation of transmission is known as microbending loss. This loss can occur because of shrinkage during cooling of the jacket and because of differential thermal contractions when the thermal properties of the jacket material differ significantly from those of the enclosed optical fibers.

Cables for these special applications often must meet requirements established by industry watchdog organizations or government regulatory agencies. For example, in order to be acceptable for use in a plenum, a cable must meet the requirements of Underwriters Laboratories test 910.

Other uses of optical fibers for communications continue to surface. For example, it is expected that optical fiber wiring harnesses will be used in jet aircraft or in nuclear installations where they also will be subject to scrutiny of watchdog organizations or of government regulatory agencies.

For such use in aircraft, the optical fiber cable must not only have a specified tensile strength to enable pulling throughout the aircraft frame, but also it must have other properties. For use in jet aircraft, for example, the sought-after cable must be able to function for a relatively long period of time in temperatures in the range of 260°C. Also, once a conflagration begins, aircraft operators require a specified time within which to make a decision as to a course of action. A candidate cable must pass a flame test in which it is exposed to a temperature of 1093°C for fifteen minutes. This latter test is used to evaluate the performance of the cable under catastrophic conditions. As should be apparent, the temperature requirements for jet aircraft use exceed those for plenum cable.

Optical fiber transmission is affected more so than metallic conductors by high temperature levels. In copper cables, although the plastic insulation may burn, the copper conductors will continue to be operative for a specified time. At the temperature levels expected in jet aircraft, the jacket and/or coating material which encloses the optical fiber will degrade. Inasmuch as the optical fiber itself cannot withstand the expected tensile loading, microcracks will develop unless the optical fiber is provided with suitable protection.

Nevertheless, there is great impetus for using optical fiber instead of copper conductors in presently manufactured aircraft. This desire is driven by the advantages which optical fiber enjoys over copper conductors. For example, optical fiber conductors are immune from electromagnetic interference, have a higher bandwidth than metallic conductors and are of a similar size and lower weight while being more reliable.

Additionally, to qualify for use in jet aircraft, the sought-after cable must be sealed hermetically. This is required in order to prevent the ingress of contaminants such as jet fuel, methyl ethyl ketone, salt water and hydraulic fluid, at least some of which may be at elevated temperatures.

Presently, cables for use in jet aircraft and other high temperature applications include copper conductors insulated and or jacketed with high temperature resistant plastic materials such as Teflon plastic, for example. In those cables, there is not the same level of concern about the copper conductors as there is about the optical fibers in an optical fiber cable used in the same environment. Should the plastic be dissolved by contaminating fluids, the metallic conductors most likely continue to provide for transmission. To the contrary, in an optical fiber cable, once the protective jacket and coating are removed from the cable, the optical fibers are susceptible to attack and transmission loss ensues.

Furthermore, the sought-after cable must be flexible so that it can be routed along tortuous paths in jet aircraft or in other confined spaces. Of course, as is well known, cables of the prior art have included corrugated shields which have provided flexibility, particularly for large pair count metallic conductor cables.

One need not dwell too long to arrive at other uses for hermetically protected, high temperature resistant cables. What is sought is a sheath protection system which may be used for a number of different cables. It must he one which is hermetically sealed, which will withstand a grossly elevated temperature for a predetermined time and which will be operative for a predetermined time should a catastrophe occur. The sought-after cable must have a relatively small diameter and requisite tensile strength. Also, it must be flexible and be relatively inexpensive to manufacture.

WO-A-85/00689 discloses a cable including a plurality of optical fibre ribbons enclosed in an inner layer of aramid fibrous material within a layer of woven glass, impregnated with PTFE, all within an outer jacket of fluoropolymer plastics material, such as PVDF. EP-A-0 158 433 discloses a cable comprising a plurality of optical fibres stranded around a glass-fibre reinforced tensile element and contained within a wrapping of mica tape, a layer of aramid fibres, another layer of mica tape and an extruded sheath of silane crosslinked polyethylene.

GB-A-2 145 556 discloses a cable comprising coated optical fibres, wound with a fire resistant material which may he glass fibre, embedded in a vulcanised, gas-tight filler sheath and enclosed in a braided metal screen of tinned copper wires, a polyester tape winding, a sheath of self-extinguishing material and an extruded sheath of nylon.

### Summary of the Invention

According to the invention there is provided a cable as set out in claim 1.

In a preferred embodiment, the inner tubular member includes a woven fabric of a heat resistant material in which are disposed loosely one or more optical fibers and may be referred to as a core tube. The core could just as well include optical fiber ribbons in which optical fibers may be sandwiched between two tapes, or bonded with a suitable material. Each of the optical fibers is enclosed in a polyimide coating. If a ribbon arrangement is used, the coated optical fibers are held between two polyimide tapes, for example. The core tube which may or may not be covered with a core wrap material for additional thermal protection is disposed within a corrugated metallic tube which has a closed seam and which is made of stainless steel. The corrugated metallic tube provides a hermetic seal in a longitudinal direction along the cable length. Outer protection and tensile strength are provided by a braided tube which preferably also is made of stainless steel.

### Brief Description of the Drawing

FIG. 1 is a perspective view of an optical fiber cable of this invention;
FIG. 2 is an end cross-sectional view of the cable of FIG. 1;
FIG. 3 is an enlarged view of an optical fiber ribbon which may be included in the core of the cable of FIG. 1;
FIG. 4 is an end cross-sectional view of another embodiment of this invention; and
FIG. 5 is an end cross-sectional view of still another embodiment of this invention.

### Detailed Description

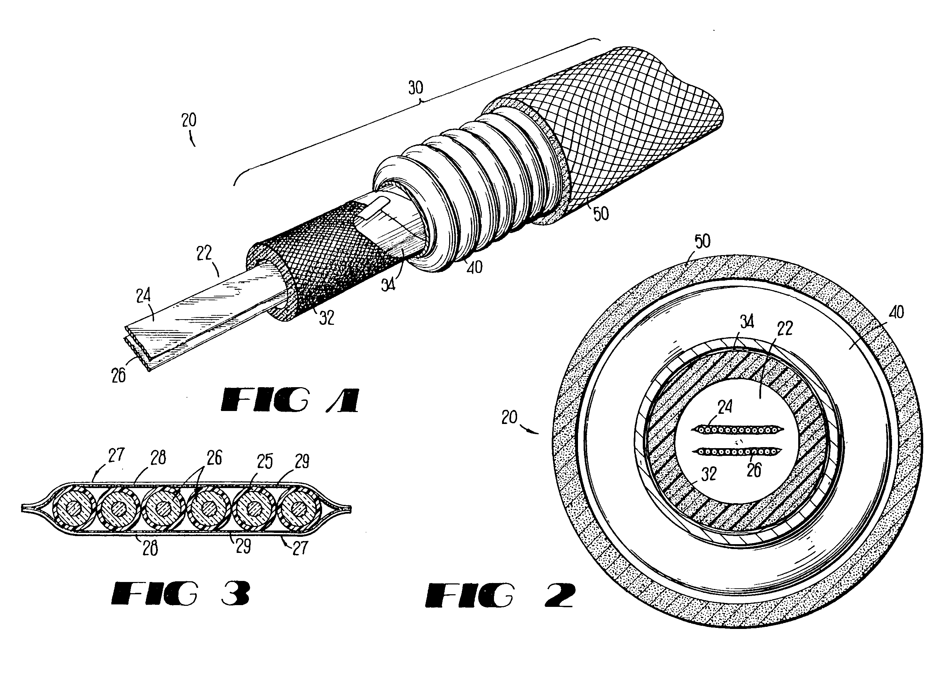

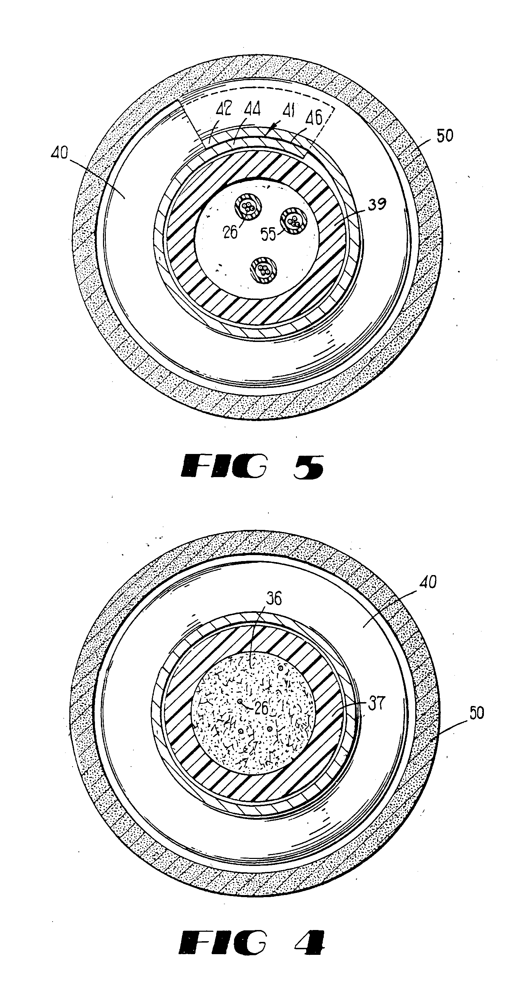

Referring now to FIGS. 1 and 2, there is shown a cable which is designated generally by the numeral 20. The cable 20 which includes an optical fiber core 22 is especially suited to be used in relatively high temperature environments for prolonged periods of time. As is seen, the optical fiber core 22 includes a plurality of ribbons each being designated by the numeral 24 and each comprising a plurality of optical fibers 26-26.

In order to optimize the thermal protection, each of the optical fibers 26-26 is provided with a polyimide coating 25 (see FIG.3) having an outer diameter of about 145 microns. Further, each of the ribbons 24-24 is made in a manner to enhance the thermal resistance of the cable 20. For example, a plurality of the optical fibers 26-26 are enclosed between two tapes, each of which is a laminate 27 (see FIG. 3) comprising a polyimide layer 28 such as Kapton® polyimide and a layer 29 of a special high temperature resistant adhesive material which is contiguous to the optical fibers. Such a laminate is available from CHR Industries, Inc. of New Haven, Ct. under the trademark designation Temp-R-Tape®.

It should be apparent that the core 22 is not limited to a ribbon or a plurality of ribbons. For example, the core 22 may include a plurality of optical fibers 26-26 (see FIGS. 4 and 5) in a stranded or non-stranded configuration.

In order for the cable 20 to be capable of being used in high temperature contaminating environments, the cable includes a sheath system designated generally by the numeral 30. An innermost element of the sheath system 30 is an inner tubular member 32. In a preferred embodiment, the inner tubular member 32 comprises a woven material which is made of a high temperature resistant material. Such a material may be one such as ST heat treated fiberglass sleeving which is marketed by Bentley Harris. In another embodiment, the inner tubular member 32 may be a high temperature resistant plastic material such as silicone 37 (see FIG. 4) or Teflon plastic 39 (see FIG. 5) which has been extruded about the core. Typically, the inner tubular member has a thickness of about 0.101cm and an inner diameter of about 0.41cm.

Enhanced thermal and mechanical protection also may be provided for the core 22. As is shown in FIG. 1 a thermal core wrap 34 is wrapped helically about the inner tubular member 32. In a preferred embodiment, the core wrap 34 comprises a Kapton® polyimide tape marketed by E.I DuPont de Nemours.

Further modifications are within the scope of this invention. For example, additional fiberglass 36 (see FIG. 4) may be provided as a packing in the inner tubular member in engagement with the optical fibers. This core packing cushions the optical fibers 26-26 against vibrations and, in an additional function, causes the cable to have enhanced thermal performance at elevated temperatures.

The inner tubular member 32 is enclosed by an intermediate tubular member 40 which is effective to withstand lateral compressive loading, to provide the cable with flexibility and to seal the cable to prevent the ingress of contaminants into the core. In a preferred embodiment, the intermediate tubular member 40 comprises a corrugated metallic tube which encloses the inner tubular member 32. The corrugated metallic tube preferably is made of stainless steel which ideally is is suited to resist attack by corrosive liquids that may contact the cable. Further, the corrugated tube provides a hermetic seal longitudinally of the cable 20 by causing a corrugated tape to become wrapped about the inner tubular member in a manner to provide a longitudinal sealed seam 41 (see FIG. 5). Such a seam may be provided by causing longitudinal edge portions 42 and 44 of a corrugated metallic tape to be overlapped to form the longitudinally extending seam 41 with an adhesive material disposed therebetween. In the alternative, the corrugated intermediate tubular member may be seamless. For the preferred embodiment, the corrugated intermediate tubular member has an inner diameter of about 0.64cm and an outer diameter of about 1.15cm.

Of course, for the cable to have an effective hermetic seal, its ends also must be sealed. This may be accomplished by special connectors or end plugs not herein shown.

Other embodiments of the intermediate tubular member 40 are contemplated by the invention. For example, for some temperature environments, a tubular metallic member having an inner surface provided with a coating of TEFLON plastic may be used to enclose the inner tubular member. Such an intermediate tubular member possesses suitable flexibility and temperature resistant properties.

Further, the sheath system 30 includes an outer tubular member or jacket 50. The outer tubular member provides the cable 20 with suitable mechanical protection and tensile strength. It must be capable of withstanding elevated temperatures for extended periods of time and must resist the corrosive impact of various contaminants to which it may be exposed. In the preferred embodiment, the outer tubular member 50 is made of a braided stainless steel material having a thickness of about 0.076cm.

The cable 20 of this invention fills a need to provide an optical communications medium which may be exposed to relatively high temperatures for extended periods of time and simultaneously to corrosive atmospheres. For example, in one use which is envisioned, the cable may be exposed to contaminants while being exposed to a temperature of at least 260°C for as long as 30,000 hours. Advantageously, the cable 20 is capable of being grounded through its metallic sheath components to provide protection against lightning. The cable 20 is relatively small in diameter, and is sufficiently flexible to be routed in tortuous paths. Also, it has sufficient tensile strength to allow it to be pulled in cable runs and sufficient compressive strength to withstand expected compressive loading. Further, the braided stainless steel jacket 50 provides suitable strength for the cable without compromising its flexibility.

Still further, the cable 20 of this invention provides protection for a limited time under catastrophic conditions. For example, it remains operative notwithstanding exposure to a temperature of at least 1093°C for at least fifteen minutes. This provides sufficient time for an aircraft pilot, for example, to make a decision which may affect the lives of many passengers.

In still another embodiment, the core 22 includes a plurality of groups of individual optical fibers. Each group of the optical fibers is provided with an individual jacket 55 (see FIG. 5) which may be a tubular member made of a woven fiberglass material or a suitable plastic material. The plurality of individually jacketed optical fiber groups is enclosed in the inner tubular member 32, 37 or 39, corrugated metallic tube 40 and the braided stainless steel jacket 50 shown in FIG. 1.

It is to be understood that the above-described arrangements are simply illustrative of the invention. Other arrangements may be devised by those skilled in the art which will embody the principles of the invention.

## Claims

1. A temperature resistant fiber optic communications cable for providing continued transmission of light without degradation, notwithstanding exposure for at least 30,000 hours to a temperature of at least about 260° C or exposure for at least fifteen minutes to a temperature of at least about 1093° C and exposure to contaminants, said cable comprising:
a core (22) which includes at least one optical fibre transmission medium (26);
a first inner tubular member (32) which comprises a temperature-resistant fiberglass material and which encloses said core;
a second tubular member (40) which encloses said inner tubular member and which has a closed circumferential periphery for preventing the ingress of contaminants; and
a third outer tubular member (50) which comprises braided metal screen and which encloses said second tubular member, said outer tubular member providing the cable with tensile strength; CHARACTERISED IN THAT
the fiber transmission medium (26) is provided with a polyimide coating; in that
the second tubular member (40) comprises a corrugated metallic tube, whose corrugations provide the cable with flexibility; and in that
the metal of the braided metal screen (50) is stainless steel.

2. A communications cable as claimed in claim 1, wherein said second tubular member is made of stainless steel material.

3. A communications cable as claimed in claim 1 or claim 2, wherein said second tubular member is coated with a fluoropolymer plastics material.

4. A communications cable as claimed in any of the preceding claims wherein said second tubular member has a sealed longitudinal seam (41).

5. A communications cable as claimed in any of the preceding claims wherein said core comprises a plurality of optical fibers (26) held between two tapes (27), each of said tapes comprising a layer (28) of polyimide material and a layer (29) of a high temperature resistant adhesive material.

## Patentansprüche

1. Temperaturbeständiges, faseroptisches Kommunikationskabel, mit dem eine andauernde Übertragung von Licht ohne Degradation möglich ist, trotz einer Temperatureinwirkung von mindestens 260°C für mindestens 30.000 Stunden oder einer Temperatureinwirkung von mindestens 1093°C für mindestens 15 Minuten und gleichzeitiger Einwirkung von Verschmutzungen, mit folgenden Merkmalen ein Kern (22) enthält mindestens ein faseroptisches Übertragungsmedium (26);
ein erstes inneres Rohr (32) enthält ein temperaturbeständiges Glasfaserstoffmaterial und umschließt den Kern;
ein zweites Rohr (40) umschließt das innere Rohr und besitzt eine geschlossene, umlaufende Peripherie, um das Eindringen von Verunreinigungen zu verhindern;
eine drittes äußeres Rohr (50) umfaßt eine geflochtene Metallabschirmung, umgibt das zweite Röhrenelement und sorgt für die Zugfestigkeit des Kabels,
dadurch gekennzeichnet,
daß das Faserübertragungsmedium (26) mit einer Polyimidbeschichtung versehen ist,
daß das zweite Rohr (40) ein metallisches Wellrohr enthält, dessen Wellungen für die Flexibilität des Kabels sorgen, und
daß das Metall der geflochtenen Metallabschirmung (50) aus rostfreiem Stahl ist.

2. Kommunikationskabel nach Anspruch 1,
dadurch gekennzeichnet,
daß das zweite Rohr aus rostfreiem Stahl gefertigt ist.

3. Kommunikationskabel nach Anspruch 1 oder 2,
dadurch gekennzeichnet,
daß das zweite Rohr mit einem Fluorpolymerkunststoffmaterial beschichtet ist.

4. Kommunikationskabel nach einem der vorangegangenen Ansprüche,
dadurch gekennzeichnet,
daß das zweite Rohr eine abgedichtete, sich längs erstreckende Naht (41) besitzt.

5. Kommunikationskabel nach einem der vorangegangenen Ansprüche,
dadurch gekennzeichnet,
daß der Kern eine Vielzahl an optischen Fasern (26) umfaßt, die zwischen zwei Folienstreifen (27) gehalten werden, und daß die Folienstreifen jeweils eine Schicht (28) eines Polyimidmaterials und eine Schicht ( 29) eines hochtemperaturbeständigen Klebstoffs enthalten.

## Revendications

1. Un câble de télécommunications à fibres optiques résistant à la température, conçu pour assurer la transmission ininterrompue de lumière sans dégradation, malgré l'exposition pendant au moins 30 000 heures à une température d'au moins environ 260°C, ou l'exposition pendant au moins quinze minutes à une température d'au moins environ 1093°C, et l'exposition à des contaminants, ce câble comprenant :
une âme (22) qui comprend au moins un support de transmission à fibres optiques (26);
un premier élément tubulaire intérieur (32) qui consiste en un matériau consistant en fibres de verre résistant à la température et qui enferme l'âme;
un second élément tubulaire (40) qui enferme l'élément tubulaire intérieur et qui comporte une périphérie fermée ayant la forme d'une circonférence, pour empêcher la pénétration de contaminants; et
un troisième élément tubulaire extérieur (50) qui est constitué par un écran en métal tressé et qui enferme le second élément tubulaire, cet élément tubulaire extérieur conférant au câble sa résistance à la traction; CARACTERISE EN CE QUE
le support de transmission à libres (26) comporte un revêtement de polyimide; en ce que
le second élément tubulaire (40) consiste en un tube métallique ondulé dont les ondulations assurent la flexibilité du câble; et en ce que
le métal de l'écran en métal tressé (50) est de l'acier inoxydable.

2. Un câble de télécommunications selon la revendication 1, dans lequel le second élément tubulaire est fabriqué en acier inoxydable.

3. Un câble de télécommunications selon la revendication 1 ou la revendication 2, dans lequel le second élément tubulaire est revêtu d'une matière plastique consistant en un fluoropolymère.

4. Un câble de télécommunications selon l'une quelconque des revendications précédentes, dans lequel le second élément tubulaire comporte un joint longitudinal hermétique (41).

5. Un câble de télécommunications selon l'une quelconque des revendications précédentes, dans lequel l'âme comprend un ensemble de fibres optiques (26) qui sont maintenues entre deux bandes (27), chacune de ces bandes comprenant une couche (28) d'un matériau du type polyimide, et une couche (29) d'un matériau adhésif résistant à des températures élevées.
